# EUROPÄISCHE PATENTSCHRIFT

(11) **EP 2 167 600 B1**
(45) Veröffentlichungstag und Bekanntmachung des Hinweises auf die Patenterteilung: **12.10.2011**
(21) Anmeldenummer: 08759782.9
(22) Anmeldetag: 20.05.2008
(51) Int. Cl.: C09J 167/02

(54) **FEUCHTIGKEITSHÄRTENDER SCHMELZKLEBSTOFF MIT GUTER HAFTUNG**
MOISTURE-CURING HOT-MELT ADHESIVE WITH GOOD ADHESION
ADHÉSIF THERMOFUSIBLE DURCISSANT À L'HUMIDITÉ AVEC UNE BONNE ADHÉSION

(30) Priorität: 17.07.2007 DE 102007033651
(43) Veröffentlichungstag der Anmeldung: 31.03.2010
(73) Patentinhaber: Evonik Degussa GmbH, 45128 Essen (DE)
(72) Erfinder: BRENNER, Gabriele, 48249 Dülmen (DE); KOSCHABEK, René, 68259 Mannheim (DE)
(86) Internationale Anmeldenummer: PCT/EP2008/056167
(87) Internationale Veröffentlichungsnummer: WO 2009/010324

(56) Entgegenhaltungen:
- US-A- 4 585 854

## Beschreibung

Die vorliegende Erfindung betrifft die Verwendung von Polyestern auf Basis von Dicarbonsäuren mit ungerader Kohlenstoffanzahl und Polyolen mit ungerader Kohlenstoffanzahl als Klebstoff oder in Klebstoffen. Ein weiterer Gegenstand der vorliegenden Erfindung sind Klebstoffe enthaltend die genannten Polyester sowie deren Verwendung zur Herstellung von Verklebungen.

Feuchtigkeitshärtende Schmelzklebstoffe stellen in der Klebstoffindustrie eine bedeutende, seit Jahren stark wachsende Produktgruppe dar. Sie bieten die Vorteile, frei von Lösungsmitteln zu sein, in der Wärme mit niedriger Viskosität applizierbar zu sein und nach Abkühlung eine hohe Anfangsfestigkeit aufzubauen, die die rasche Weiterverarbeitung der verklebten Substrate ermöglicht. Nach Aushärtung der reaktiven Gruppen mit Feuchtigkeit weisen die Verklebungen einen sehr hohen Wärmescherstand auf.

Um einen vielfältigen Einsatz zu gewährleisten, ist es erforderlich, dass der reaktive Schmelzklebstoff ein breites Haftungsspektrum aufweist. Besonders bei schwierig zu verklebenden Substraten wie zum Beispiel Acrylnitril-Butadien-Styrol (ABS), PMMA (Polymethylmethacrylat), Polyamid (PA) und Aluminium ist die Haftung bei den bisher bekannten reaktiven Schmelzklebstoffen nicht ausreichend.

EP 0 340 906 beschreibt schnell abbindende Polyurethan-Klebstoffe, die aus einer Mischung von mindestens zwei amorphen Präpolymeren bestehen, die durch unterschiedliche Glasübergangstemperaturen charakterisiert sind. Das erste Polyurethanpräpolymer hat eine Glasübergangstemperatur oberhalb Raumtemperatur und das zweite Polyurethanpräpolymer hat eine Glasübergangstemperatur unterhalb Raumtemperatur. Das Präpolymer mit der höheren Glasübergangstemperatur besteht bevorzugt aus einem Polyesterdiol und einem Polyisocyanat. Das Polyesterdiol kann ein Copolymer aus aromatischen Säuren (wie Isophthalsäure oder Terephthalsäure) und/oder aliphatischen Säuren (wie Adipinsäure, Azelainsäure oder Sebazinsäure) und niedrigmolekularen Diolen (wie Ethylenglycol, Butandiol, Hexandiol) sein. Das Präpolymer mit der niedrigen Glasübergangstemperatur besteht aus einem linearen oder schwach verzweigten Polyester, einem Polyether oder einem anderen OH-terminierten Polymer und Polyisocyanat. Auch spezielle Polyester wie Polycaprolactone oder Polycarbonate können eingesetzt werden.

In der DE 38 27 224 A sind feuchtigkeitshärtende isocyanatfunktionelle Schmelzklebstoffe mit besonders hoher Abbindegeschwindigkeit beschrieben. Erfindungswesentlich ist dabei die Verwendung von Polyestern, deren Rückgrat bevorzugt rein aliphatisch ist und von mindestens 12 bis zu maximal 26 Methylengruppen in der Repetiereinheit aus Diol und Dicarbonsäuren enthalten, wobei Dicarbonsäuren mit 8 - 12 Methylengruppen verwendet werden. Entscheidend ist, dass Decandisäure, Dodecandisäure oder Tetradecandisäure enthalten sind. Optional können die aliphatischen Dicarbonsäuren bis zu 80 mol-% durch aromatische Dicarbonsäuren ersetzt sein. Die Art der aliphatischen Diole ist an sich beliebig, jedoch sind Diole mit 6 bis 12 Methylengruppen bevorzugt. Der Klebstoff kann zum Verkleben verschiedener Substrate wie Metall, Glas, Papier, Keramik, Leder oder Kunststoffen eingesetzt werden.

EP 0455 400 beschreibt ein Gemisch aus Isocyanat terminierten Polyurethanpräpolymeren. Das erste Präpolymer basiert auf Polyhexamethylenadipat, das zweite auf Polytetramethylenetherglykol. Der Klebstoff soll eine gute Haftung zu Kunststoffen haben. Nachteil des Klebstoffs ist die mangelnde Haftung auf Metall.

EP 568607 beschreibt ein Gemisch aus Isocyanat terminierten Polyurethanpräpolymeren. Das erste Präpolymer ist ein Reaktionsprodukt aus einem überwiegend semikristallinen Polyester und einem Polyisocyanat. Der Polyester ist ein Reaktionsprodukt eines Diols mit 2 bis 10 Methylengruppen und einer Dicarbonsäure mit 2 bis 10 Methylengruppen. Diole können Ethylenglykol, Butandiol-1,4, Pentandiol-1,5, Hexandiol-1,6, Octandiol-1,8, Decandiol-1,10, Cyclohexandiol-1,4, Cyclohexandimethanol-1,4 und Mischungen daraus sein. Dicarbonsäuren können Bernsteinsäure, Glutarsäure, Adipinsäure, Sebacinsäure, Azelainsäure, Dodecandisäure und Mischungen daraus sein. Bevorzugt sind Polyester aus Hexandiol-1,6 und Adipinsäure. Das zweite Präpolymer enthält ein Reaktionsprodukt eines Polytetramethylenetherglykols und eines Polyisocyanats. Das dritte Präpolymer basiert auf einem Reaktionsprodukt eines amorphen Polyesters und einem Polyisocyanat. Der amorphe Polyester enthält aromatische Struktureinheiten. Bevorzugte Diole sind Ethylenglykol, Propylenglykol, Butandiol, Hexandiol, Cyclohexandimethanol, Neopentylglykol und Mischungen daraus. Die Dicarbonsäuren werden ausgewählt aus der Gruppe bestehend aus Bernsteinsäure, Adipinsäure, Sebacinsäure, Isophthalsäure, ortho-Phthalsäure, Terephthalsäure und Mischungen daraus. Das Gemisch kann noch ein viertes Präpolymer enthalten, das aus einem Reaktionsprodukt aus einem verzweigten Polyester aus Adipinsäure, Diethylenglykol und Trimethylolpropan mit einem Polyisocyanat besteht. Das höhere Molekulargewicht soll die Klebrigkeit und Kohäsion signifikant erhöhen. Nachteilig ist die hohe Viskosität. Der Klebstoff soll gut auf Metallen und polymeren Substraten wie Polystyrol oder Polymethylmethacrylat haften.

US 6,221,978 beschreibt einen feuchtigkeitshärtbaren Polyurethanklebstoff, der aus einem Epoxidharz und einem Polyurethanpräpolymeren besteht. Das Polyurethanpräpolymer ist ein Reaktionsprodukt eines Polyols und eines Polyisocyanats. Das Polyol ist ein Reaktionsprodukt aus aromatischen Disäuren, optional Comonomerdisäuren und Diolen. Als Comonomersäuren werden genannt Dodecandisäure, Bernsteinsäure, Glutarsäure, Adipinsäure, Azelainsäure, Sebazinsäure, Octadecandicarbonsäure, 1,4-Cyclohexandicarbonsäure, Dimerfettsäuren und Fumarsäure. In einer besonderen Ausführungsform ist die aromatische Disäure Isophthalsäure und die Comonomersäure ist Adipinsäure. Als Diole werden genannt Ethylenglykol, Propandiol-1,2, Propandiol-1,3, Butandiol-1,3, Pentandiol-1,5, Hexandiol-1,4, Hexandiol-1,6, Decandiol-1,10, Neopentylglykol, Diethylenglykol, Polyethylenglykol, Dipropylenglykol, Polypropylenglykol, 1,4-Cyclohexandimethanol, 1,4- Cyclohexandiol, Bisphenol A- Bausteine und Mischungen daraus. Bevorzugtes Diol ist Hexandiol-1,6. Von entscheidender Bedeutung ist, dass die aromatische Disäure frei von Phthalsäure ist. In einer Ausführungsform enthält der Klebstoff zusätzlich kristalline Polyesterpolyole, um die Anfangsfestigkeit zu erhöhen. Das kristalline Polyesterpolyol besteht aus einem Reaktionsprodukt eines aliphatischen Diols mit 2 bis 10 Methylengruppen und einer aliphatischen Disäure mit 2 bis 10 Methylengruppen. Geeignete Diole sind Ethylenglykol, Butandiol-1,4, Pentandiol-1,5, Hexandiol-1,6, Octandiol-1,8, Decandiol-1,10, 1-4-Cyclohexandiol und 1,4-Cyclohexandimethanol. Geeignete aliphatische Disäuren sind Bernsteinsäure, Glutarsäure, Adipinsäure, Sebacinsäure, Dedecandisäure, Dimerfettsäuren und Mischungen daraus. In einer besonderen Ausführungsform besteht das kristalline Polyesterpolyol aus Hexandiol und Dodecandisäure. Der Klebstoff kann noch flexible und amorphe Polyester aus Hexandiol, Butandiol, Neopentylglykol, Ethylenglykol, Diethylenglykol, Propylenglykol oder 2-Methylpropandiol und Adipinsäure, Isophthalsäure oder Terephthalsäure enthalten. Der Klebstoff wird für die Verklebung von schwierig zu verklebenden Substraten mit niedriger Oberflächenenergie eingesetzt. Das Epoxidharz soll die Haftung zu Polyethylen, Polypropylen und Metallen erhöhen. Von entscheidender Bedeutung ist, dass die aromatische Disäure frei von Phthalsäure ist.

US 2003/0144454 beschreibt Polyurethanzusammensetzungen auf der Basis von Polyesterblockcopolymeren und Polyisocyanaten. Die Polyesterblockcolymere bestehen aus Polyethern, Polybutadien, Polycarbonat oder Polycaprolacton und einem Polyester. Die Polyesterstruktureinheit des Blockcopolymeren besteht bevorzugt aus C₆ -C₁₄ Dicarbonsäuren und C₄-C₁₂ Diolen. Dicarbonsäuren und Diole mit einer geraden Anzahl an Kohlenstoffatomen sind bevorzugt. Der Klebstoff kann optional Reaktionsprodukte aus Polyisocyanaten und Polyesterpolyolen oder/und Polyetherpolyolen enthalten. Der Klebstoff auf Basis von Polyesterblockcopolymeren eignet sich für die Verklebung diverser Substrate, besonders metallischer Substrate und Kunststoffe. Der Nachteil dieses Klebstoffs ist die aufwendige Herstellung des Blockcopolymeren.

US 4,585,854 beschreibt eine Polyesterzusamensetzung, bestehend aus einer Dicarbonsäure- und Polyolkomponente. Als Säurekomponente wird dabei eine Mischung aus Alkyldicarbonsäure und Terephthalsäure eingesetzt. Durch den Zusatz eines Sulfonsäuresalzes wird die Dispersibilität in Wasser / Alkohol Systemen erhöht.

Es bestand die Aufgabe zur Entwicklung feuchtigkeitsvernetzender Schmelzklebstoffe, die eine weiter verbesserte Haftung auf schwierig zu verklebenden Substratoberflächen gewährleisten können. Überraschenderweise wird die Aufgabe durch Bereitstellung eines Klebstoffes, insbesondere einesschmelzklebstoffes, gemäß den Ansprüchen gelöst.

Ein erster Gegenstand der vorliegenden Erfindung ist demgemäß die Verwendung von Polyestern auf Basis von Dicarbonsäuren mit ungerader Kohlenstoffanzahl gemäß Anspruch 1 und Polyolen mit ungerader Kohlenstoffanzahl als Klebstoff oder in Klebstoffen. Es hat sich überraschenderweise herausgestellt, dass die erfindungsgemäß eingesetzten Polyester zu besonders guten Verklebungen führen, was auf der Basis des Standes der Technik nicht vorherzusehen war.

Die erfindungsgemäß spezifisch ausgewählten Polyester basieren auf Dicarbonsäuren mit ungerader Kohlenstoffanzahl, also mit 2n-1 (n= 1, 2, 3...) Methylengruppen. Vorzugsweise sind die Dicarbonsäuren linear. "Linear" im Sinne der vorliegenden Erfindung meint, dass sich die funktionellen Gruppen, beispielsweise die Carboxyfunktionen, an den endständigen Kohlenstoffatomen der längsten Kohlenstoffkette befinden.

Beispiele geeigneter linearer Dicarbonsäuren sind Malonsäure, Glutarsäure, Pimelinsäure, Azelainsäure, Undecandisäure, Tridecandisäure und Pentadecandisäure. Grundsätzlich können die Dicarbonsäuren mit ungerader Kohlenstoffanzahl aliphatisch oder aromatisch sein.

In einer besonders bevorzugten Ausführungsform sind die Dicarbonsäuren aliphatisch, insbesondere handelt es sich um lineare aliphatische Dicarbonsäuren und ganz besonders bevorzugt um jene aus der Gruppe umfassend Glutarsäure, Pimelinsäure, Azelainsäure, Undecandisäure, Tridecandisäure und Pentadecandisäure, wobei Azelainsäure und Undecandisäure wiederum bevorzugt sind.

Im Hinblick auf die Polyole mit ungerader Kohlenstoffanzahl, also mit 2n-1 (n= 1, 2, 3...) Kohlenstoffatomen, gibt es grundsätzlich keine Einschränkungen. Bevorzugt sind die Polyole linear und unverzeigt, wobei die bei den Dicarbonsäuren genannte Definition von "linear" auch für die Polyole gilt.
"Unverzweigt" im Sinne der vorliegenden Erfindung meint, dass keine Seitenketten vorhanden sind und die C-Atome in Form von CH₂-Gruppen vorliegen.

Insbesondere bevorzugt sind die Polyole linear, aliphatisch und unverzweigt und insbesondere ausgewählt aus der Gruppe umfassend 1,3-Propandiol, 1,5-Pentandiol, 1,7-Heptandiol, 1,9-Nonandiol, 1,11-Undecandiol und 1,13-Tridecandiol, wobei 1,3-Propandiol und 1,5-Pentandiol ganz besonders bevorzugt sind.

Insbesondere basieren die Polyester auf linearen, aliphatischen Dicarbonsäuren, und auf linearen aliphatischen Diolen. Überraschenderweise wurde gefunden, dass mit Hydroxylpolyestern, welche lineare aliphatische Dicarbonsäuren mit einer ungeraden Anzahl an Kohlenstoffatomen und lineare aliphatische Diole mit einer ungeraden Anzahl an Kohlenstoffatomen enthalten, die Haftung zu schwierig zu verklebenden Substraten wie Aluminium, ABS, PMMA oder PA verbessert werden kann.

Die erfindungsgemäß eingesetzten Polyester, auch Hydroxylpolyester genannt, besitzen mehr als eine OH-Gruppe, und sie sind ganz besonders bevorzugt difunktionell. Hydroxylpolyester im Sinne der Erfindung haben OH-Zahlen von 5 - 150, vorzugsweise von 10 - 50. Die Hydroxylzahl (OH-Zahl) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.
Die erfindungsgemäß eingesetzten Polyester weisen vorzugsweise Säurezahlen von unter 10, bevorzugt unter 5 und besonders bevorzugt unter 2 auf. Die Säurezahl wird bestimmt nach DIN EN ISO 2114. Unter der Säurezahl (SZ) versteht man dabei diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N methanolischer Kalilauge gegen Phenolphthalein titriert.

Das zahlenmittlere Molekulargewicht der erfindungsgemäßen Polyester beträgt 700 - 22000 g/mol, vorzugsweise 2000 - 10000 g/mol. Das Molekulargewicht wird bestimmt mittels Gelpermeationschromatographie (GPC). Charakterisierung der Proben erfolgte in Tetrahydrofuran als Eluent nach DIN 55672-1.
Mₙ (UV) = Zahlenmittleres Molgewicht (GPC, UV-Detektion), Angabe in g/mol
M_{w} (UV) = Massenmittleres Molgewicht (GPC, UV-Detektion), Angabe in g/mol

Der Schmelzpunkt der erfindungsgemäß eingesetzten Hydroxylpolyester liegt im Bereich von 20 °C - 125 °C, bevorzugt von 30 °C - 100 °C und ganz besonders bevorzugt in einem Bereich von 35 °C - 80 °C.
Der Schmelzpunkt wird bestimmt nach der DSC-Methode DIN 53765.

Neben den Dicarbonsäuren mit ungerader Kohlenstoffanzahl liegen keine weiteren Dicarbonsäuren vor.

Gegebenenfalls können an Stelle der freien Säuren auch ihre veresterbaren Derivate wie z. B. entsprechende Niedrigalkylester oder cyclische Anhydride eingesetzt werden.

In einer weiteren Ausführungsform der vorliegenden Erfindung können die Polyole mit ungerader Kohlenstoffanzahl teilweise durch Polyole mit gerader Kohlenstoffanzahl und/oder durch verzweigte Polyole ersetzt sein. Bei den Polyolen mit gerader Kohlenstoffanzahl oder bei den verzweigten Polyolen kann es sich um aliphatische, cycloaliphatische und/oder aromatische Polyole handeln, bevorzugt Diole. Diolseitig beträgt der Anteil der Polyole mit ungerader Kohlenstoffanzahl 5 - 100 mol-%, bevorzugt 20 - 100 mol-% und ganz besonders bevorzugt 50 - 100 mol-%, bezogen auf die Gesamtmenge an Polyolen.

Beispiele für Polyole mit gerader Kohlenstoffanzahl oder für verzweigte Polyole sind Ethylenglykol, Propandiol-1,2, Butandiol-1,4, Hexandiol-1,6, Dodecandiol-1,12, Neopentylglykol, Butylethylpropandiol-1,3, Methylpropandiol, Methylpentandiole, Cyclohexandimethanole, Trimethylolpropan, Pentaerythrol und Mischungen daraus. Unter aromatischen Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Polyole können auch Etherdiole, d. h. Oligomere bzw. Polymere, z. B. auf Basis Ethylenglykol, Propylenglykol oder Butandiol-1, 4 enthalten sein. Besonders bevorzugt sind lineare aliphatische Glykole.
Neben Polyolen und Polycarbonsäuren können auch Lactone für die Synthese der Hydroxylpolyester verwendet werden.

Die erfindungsgemäß eingesetzten Polyester sind vorzugsweise kristallin. Die genannten Hydroxylpolyester, welche Dicarbonsäuren mit einer ungeraden Anzahl an Kohlenstoffatomen und Diole mit einer ungeraden Anzahl an Kohlenstoffatomen besitzen, werden mittels etablierter Techniken für Kondensationsreaktionen hergestellt. Hierzu werden beliebige Polyole und die erfindungsgemäße(n) Polycarbonsäure(n) oder ggf. dieselbe(n) im Gemisch mit anderen (cyclo-)aliphatischen und/oder aromatischen Polycarbonsäuren bzw. deren um- oder veresterbaren Derivaten eingesetzt, wobei das Äquivalentverhältnis von Hydroxylgruppen zu Carboxylgruppen 1,02 bis 1,5, bevorzugt 1,05 bis 1,3 beträgt. Die (Poly-)Kondensation erfolgt bei Temperaturen von 150 °C bis 270 °C innerhalb von 3 bis 30 h, wobei nach Abspaltung des Großteils der theoretisch berechneten Wassermenge mit Vakuum gearbeitet werden kann. Wahlweise kann auch unter Zusatz von Katalysatoren zur Beschleunigung der (Poly-)Kondensationsreaktion und/oder Schleppmitteln zur Abtrennung des Reaktionswassers gearbeitet werden. Typische Katalysatoren sind Organotitan- oder -zinnverbindungen, wie z. B. Tetrabutyltitanat oder Dibutylzinnoxid. Die Katalysatoren können wahlweise am Beginn der Reaktion mit den anderen Ausgangsstoffen oder erst später während der Reaktion chargiert werden. Als Schleppmittel können z. B. Toluol oder diverse SolventNaphta Qualitäten dienen. Wahlweise können die Hydroxylpolyester ohne oder mit Fahrhilfsmitteln oder Additiven wie z. B. Antioxidantien ausgestattet werden.

Ein weiterer Gegenstand der vorliegenden Erfindung sind Klebstoffe enthaltend Polyester auf Basis von Dicarbonsäuren mit ungerader Kohlenstoffanzahl und Polyolen mit ungerader Kohlenstoffanzahl. Grundsätzlich kann es sich bei den erfindungsgemäßen Klebstoffen um jede dem Fachmann bekannte Art von Klebstoffen handeln, insbesondere handelt es sich um Schmelzkleber (Hot-melts). Ganz besonders bevorzugt handelt es sich bei den Schmelzklebern um reaktive Schmelzklebstoffe (reactive hot-melts, RHM), insbesondere feuchtigkeitsvernetzende Schmelzklebstoffe.

Insbesondere die erfindungsgemäßen feuchtigkeitsvernetzenden Schmelzklebstoffe enthalten zusätzlich Isocyanate und/oder Polyisocyanate. In den Klebstoffen beträgt das OH:NCO-Verhältnis von Polyester zu Isocyanat und/oder Polyisocyanat 1:1,2 bis 1:3, vorzugsweise von 1:1,5 bis 1:2,5.

Die Polyisocyanate können di- und/oder multifunktionelle, aromatische, aliphatische oder/und cycloaliphatische Isocyanate sein. Aromatische Polyisocyanate sind besonders bevorzugt. Beispiele für Polyisocyanate sind 4,4'-Diphenylmethandiisocyanat, 2,4'-Diphenylmethandiisocyanat, Toluoldiisocyanat-Isomere, Isophorondüsocyanat, Hexamethylendiisocyanat, 4,4'-Dicyclohexylmethandiisocyanat und Mischungen daraus. Insbesondere handelt es sich um 4,4'-Diphenylmethandiisocyanat und Mischungen aus 4,4'-Diphenylmethandiisocyanat und 2,4'-Diphenylmethandiisocyanat.

In den reaktiven Schmelzklebstoffen beträgt der Anteil der erfindungsgemäßen Hydroxylpolyester 1 - 99 Gew.-%, und bevorzugt 1 - 70 Gew.-%.

In bevorzugten Ausführungsformen sind in den Schmelzklebstoffen neben den erfindungsgemäßen Hydroxylpolyestern auch andere Polyole vorhanden, unter denen beispielsweise Polyesterpolyole, Polyetherpolyole und beliebige hydroxylfunktionelle Komponenten zu verstehen sind.

Die beigemischten Polyesterpolyole können flüssige und/oder feste, amorphe und/oder (teil-)kristalline Polyester beliebiger Struktur mit Molekulargewichten Mn zwischen 1000 g/mol und 30000 g/mol, bevorzugt zwischen 2000 g/mol und 10000 g/mol (berechnet aus der Hydroxylzahl) sein, wobei lineare Polyesterpolyole bevorzugt verwendet werden. Die beigemischten Polyetherpolyole sind Polyetherdi- und -triole. Beispiele hierfür sind Homo- und Copolymere aus Ethylenglykol, Propylenglykol und Butandiol-1,4. Das Molekulargewicht Mn der beigemischten Polyetherpolyole sollte in einem Bereich von 200 g/mol bis 10000 g/mol, bevorzugt zwischen 400 g/mol und 6000 g/mol sein. ..

Beispiele für beliebige hydroxyfunktionelle Komponenten sind funktionalisierte (H-acide), thermoplastische Polyurethane (TPU) und/oder Polyacrylate und/oder Ethylen-Vinylacetatcopolymere (EVA).

Die erfindungsgemäßen Schmelzklebstoffe können bis zu 50 Gew.-% an weiteren Zusätzen enthalten. Diese Zusätze können sein: nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutzund Hilfsmittel.

Die erfindungsgemäßen Klebstoffe eignen sich in besonderer Weise zur Herstellung von Verklebungen. Insbesondere die erfindungsgemäßen Schmelzklebstoffe eignen sich zur Verklebung einer Vielzahl von Substraten, insbesondere zur Verklebung von metallischen Substraten und ganz besonders zur Verklebung diverser Kunststoffe. Die Art und der Umfang der Verklebung sind dabei nicht limitiert. Vorzugsweise handelt es sich bei den Verklebungen um Verklebungen in der Holz- und Möbelindustrie (beispielsweise Montageverklebung), im Automobilbereich (beispielsweise Retainerverklebungen), in der Bauindustrie, Schuhindustrie und Textilindustrie sowie im Fensterbau (beispielsweise zur Profilummantelung). Weiterhin eignen sich die erfindungsgemäßen Klebstoffe in der Verpackungsindustrie und als Dichtstoffe.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

### Herstellung der Hydroxylpolyester

### Beispiel a

Tridecandisäure-1,13 (244 g, 1.0 mol) und Pentandiol-1,5 (132 g, 1.1 mol) werden in einem 1 1-Kolben mit Destillationsaufsatz im Stickstoffstrom aufgeschmolzen. Bei Erreichen einer Temperatur von 160 °C beginnt Wasser abzudestillieren. Innerhalb von einer Stunde wird die Temperatur sukzessive auf 240 °C erhöht. Nach einer weiteren Stunde bei dieser Temperatur verlangsamt sich die Wasserabspaltung. Es werden 50 mg Titantetrabutoxid eingerührt und im Vakuum weiter gearbeitet, welches im Verlauf der Reaktion so angepasst wird, dass immer noch Destillat anfällt. Nach Erreichen des gewünschten Hydroxyl- und Säurezahlbereiches wird abgestellt. Die Hydroxylzahl, die Säurezahl und der Schmelzpunkt werden gemäß der Angaben zu Tabelle 1 bestimmt und belaufen sich auf 29 mg KOH/g, 0.6 mg KOH/g und 64 °C. Die Synthesen der Hydroxylpolyester in den Beispielen b - f und den Vergleichsbeispielen Va - Vc erfolgen in vergleichbarer Weise zu Beispiel a, wobei die in Tabelle 1 angegebenen Dicarbonsäuren und Diole eingesetzt wurden.

**Tabelle 1: Zusammensetzung der Basispolyester (in mol-%) und deren Eigenschaften**

| Bsp | Polyesterzusammensetzung | | | | | | | | | | Polyestereigen-schaften | | |
|---|---|---|---|---|---|---|---|---|---|---|---|---|---|
| | Säurekomponente | | | | | | Alkoholkomponente | | | | | | |
| | AZ | UD | TD | SB | AD | DS | PG | PD | BD | HD | OHZ | SZ | Smp |
| a | | | 100 | | | | | 100 | | | 29 | 0.6 | 64 |
| b | | 100 | | | | | 100 | | | | 30 | 1.0 | 67 |
| c | | | 100 | | | | 100 | | | | 30 | 0.3 | 75 |
| d | | 100 | | | | | | 100 | | | 31 | 0.4 | 58 |
| e | 100 | | | | | | 100 | | | | 30 | 0.4 | 51 |
| f | 100 | | | | | | | 100 | | | 30 | 0.8 | 49 |

| Vergleichsbeispiele | | | | | | | | | | | | | |
|---|---|---|---|---|---|---|---|---|---|---|---|---|---|
| Va | | | | | | 100 | | | 100 | | 30 | 0.2 | 68 |
| Vb | | | | 100 | | | | | 100 | | 30 | 0.5 | 62 |
| Vc | | | | | 100 | | | | | 100 | 30 | 0.7 | 55 |

| | | | | | | | | | | | | | |
|---|---|---|---|---|---|---|---|---|---|---|---|---|---|
| AD = Adipinsäure AZ = Azelainsäure DS = Dodecandisäure TD = Tridecandisäure UD = Undecandisäure BD = Butandiol-1,4 HD = 1,6-Hexandiol PG = 1,3-Propandiol PD = 1,5-Pentandiol OHZ = Hydroxylzahl, Angabe in mg KOH/g, gemessen nach DIN 53240-2 SZ = Säurezahl, Angabe in mg KOH/g, gemessen nach DIN EN ISO 2114 Smp = Schmelzpunkt, Angabe in °C, DSC-Methode, 2. Aufheizung | | | | | | | | | | | | | |

### Herstellung und Charakterisierung von feuchtigkeitshärtenden

### Schmelzklebstoffen

Die in den nachfolgenden Beispielen beschriebenen, feuchtigkeitshärtenden Schmelzklebstoffe (RHM) werden anhand ihrer Schmelzeviskosität bei 130 °C (Brookfield Thermosel, Spindel Nr. 27), ihres Erweichungspunktes (Ring + Kugel) nach DIN ISO 46 und ihrer Klebfestigkeit nach DIN EN 1465 charakterisiert.

### Beispiel RHM-Nr.1

In einem 500 ml Planschliffkolben werden 35 Gewichtsteile DYNACOLL 7130, 25 Gewichtsteile DYNACOLL 7230 und 40 Gewichtsteile des Hydroxylpolyesters e aufgeschmolzen und bei 130 °C im Vakuum getrocknet. Danach wird 4,4'-Diphenylmethandiisocyanat (MDI) in einem molaren OH/ NCO-Verhältnis von 1/ 2,2 zugegeben und zügig homogenisiert. Zur vollständigen Umsetzung der Reaktionspartner wird 45 Minuten bei 130 °C unter Schutzgasatmosphäre gerührt. Anschließend wird der feuchtigkeitshärtende Schmelzklebstoff abgefüllt. Der resultierende Schmelzklebstoff besitzt eine Schmelzviskosität (130 °C) von 7 Pa·s. Der Erweichungspunkt (Ring und Kugel) liegt bei 45 °C. Die Klebfestigkeit nach einer Aushärtezeit von sieben Tagen bei 20 °C und 65 % relativer Luftfeuchte beträgt auf Aluminium 5 N/mm², auf ABS 8 N/mm², Polyamid 6 N/mm² und auf PMMA 6 N/mm².

### Vergleichsbeispiel RHM-Nr.2

Die Durchführung erfolgt analog Beispiel RHM-Nr. 1, wobei der Hydroxylpolyester e durch Hydroxylpolyester Vc ersetzt ist. Der resultierende Schmelzklebstoff besitzt eine Schmelzviskosität (130 °C) von 5 Pa·s. Der Erweichungspunkt (Ring und Kugel) liegt bei 55 °C. Die Klebfestigkeit nach einer Aushärtezeit von sieben Tagen bei 20 °C und 65 % relativer Luftfeuchte beträgt auf Aluminium 3 N/mm², auf ABS 5 N/mm², Polyamid 3 N/mm² und auf PMMA 2 N/mm².

Der Vergleich der beiden vorhergehenden Beispiele zeigt die deutlich verbesserte Haftung bei Einsatz der erfindungsgemäßen Polyester.

### RHM-Nr. 3- 9

Die Durchführung erfolgt analog Beispiel RHM-Nr. 1 gemäß der in Tabelle 2 angegebenen Zusammensetzungen.

**Tabelle 2: Eigenschaften von feuchtigkeitshärtenden Schmelzklebstoffen auf Basis von Gemischen aus Polyolen und 4,4'-MDI (OH:NCO-Verhältnis 1 : 2,2)**

| RHM-Nr. | 1 | 2 | 3 | 4 | 5 | 6 | 7 | 8 | 9 |
|---|---|---|---|---|---|---|---|---|---|
| Zusammensetzung | | | | | | | | | |
| DYNACOLL 7130 | 35 | 35 | 35 | 35 | 35 | 35 | 35 | 35 | 35 |
| DYNACOLL 7230 | 25 | 25 | 25 | 25 | 25 | 25 | 25 | 25 | 25 |
| Hydroxylpolyester a | | | | | | | | | 40 |
| Hydroxylpolyester b | | | 40 | | | | | | |
| Hydroxylpolyester c | | | | | | 40 | | | |
| Hydroxylpolyester d | | | | | | | 40 | | |
| Hydroxylpolyester e | 40 | | | | | | | | |
| Hydroxylpolyester f | | | | 40 | | | | | |
| Hydroxylpolyester Va | | | | | | | | 40 | |
| Hydroxylpolyester Vb | | | | | 40 | | | | |
| Hydroxylpolyester Vc | | 40 | | | | | | | |
| **RHM-Eigenschaften** | | | | | | | | | |
| Viskosität | 7 | 5 | 6 | 5 | 7 | 13 | 8 | 10 | 17 |
| (130 °C / Pa.s) | | | | | | | | | |
| Fp(R+K) (°C) | 45 | 55 | 65 | 45 | 63 | 75 | 60 | 75 | 64 |
| Klebfestigkeit (N/mm²) | | | | | | | | | |
| Aluminum | 5 | 3 | 6 | 4 | 4 | 7 | 5 | 4 | 4 |
| ABS | 8 | 5 | 8 | 8 | 3 | 7 | 7 | 4 | 6 |
| Polyamid | 6 | 3 | 4 | 7 | 1 | 3 | 3 | 1 | 3 |
| PMMA | 6 | 2 | 4 | 5 | 2 | 3 | 5 | 2 | 3 |

| | | | | | | | | | |
|---|---|---|---|---|---|---|---|---|---|
| RHM-Nr. 2, 5 und 8 sind Vergleichsbeispiele | | | | | | | | | |

4,4'-MDI = 4,4'-Diphenylmethandiisocyanat z. B. Suprasec 1306 (Fa. Huntsman), Isonate M124 (Fa. Dow), Lupranat ME (Fa.BASF)

DYNACOLL 7130 ist ein amorpher Polyester aus C₂-, C₅- und C₁₀-Diolen, Adipinsäure, Terephthalsäure und Isophthalsäure der Fa. Degussa mit einer Glasübergangstemperatur Tg = 30 °C und Hydroxylzahl 35 mg KOH/g.

DYNACOLL 7230 ist ein flüssiger Polyester aus C₂-, C₅- und C₆-Diolen, Adipinsäure Terephthalsäure und Isophthalsäure der Fa. Degussa mit Tg = - 30 °C und Hydroxylzahl 30 mg KOH/g.

Die Beispiele zeigen, dass mit Hydroxylpolyestern, welche lineare aliphatische Dicarbonsäuren mit einer ungeraden Anzahl an Kohlenstofifatomen und lineare aliphatische Polyole mit einer ungeraden Anzahl an Kohlenstoffatomen enthalten, die Haftung zu schwierig zu verklebenden Substraten wie Aluminium, ABS, PMMA oder PA verbessert werden kann.

## Patentansprüche

1. Verwendung von Polyestern auf Basis von Dicarbonsäuren mit ungerader Kohlenstoffanzahl und Polyolen mit ungerader Kohlenstoffanzahl als Klebstoff oder in Klebstoffen, **dadurch gekennzeichnet, dass** neben den Dicarbonsäuren mit ungerader Kohlenstoffanzahl keine weiteren Dicarbonsäuren vorliegen.

2. Verwendung gemäß Anspruch 1, **dadurch gekennzeichnet, dass** die Dicarbonsäuren linear sind.

3. Verwendung gemäß Anspruch 1 oder 2, **dadurch gekennzeichnet, dass** die Dicarbonsäuren aliphatisch sind.

4. Verwendung gemäß einem oder mehreren der Ansprüche 1 bis 3, **dadurch gekennzeichnet, dass** die Polyole linear sind.

5. Verwendung gemäß einem oder mehreren der Ansprüche 1 bis 4, **dadurch gekennzeichnet, dass** die Polyole unverzweigt sind.

6. Verwendung gemäß einem oder mehreren der Ansprüche 1 bis 5, **dadurch gekennzeichnet, dass** die Polyester OH-Zahlen von 5 - 150 aufweisen.

7. Verwendung gemäß einem oder mehreren der Ansprüche 1 bis 6, **dadurch gekennzeichnet, dass** das zahlenmittlere Molekulargewicht der Polyester 700 - 22000 g/mol beträgt.

8. Verwendung gemäß einem oder mehreren der Ansprüche 1 bis 7, **dadurch gekennzeichnet, dass** der Schmelzpunkt der Polyester im Bereich von 20 -125 °C liegt.

9. Verwendung gemäß einem oder mehreren der Ansprüche 1 bis 8, **dadurch gekennzeichnet, dass** die Polyole mit ungerader Kohlenstoffanzahl teilweise durch Polyole mit gerader Kohlenstoffanzahl und/oder durch verzweigte Polyole ersetzt sind.

10. Klebstoffe enthaltend Polyester auf Basis von Dicarbonsäuren mit ungerader Kohlenstoffanzahl und Polyolen mit ungerader Kohlenstoffanzahl, **dadurch gekennzeichnet, dass** neben den Dicarbonsauren mit ungerader Kohlenstoffanzahl keine weiteren Dicarbonsäuren vorliegen.

11. Klebstoffe gemäß Anspruch 10, **dadurch gekennzeichnet, dass** es sich um Schmelzklebstoffe handelt.

12. Klebstoffe gemäß Anspruch 10 oder 11, **dadurch gekennzeichnet, dass** sie zusätzlich Isocyanate und/oder Polyisocyanate enthalten.

13. Klebstoffe gemäß einem oder mehreren der Ansprüche 10 bis 12, **dadurch gekennzeichnet, dass** sie zusätzlich andere Polyole, nichtfunktionalisierte Polymere, Pigmente bzw. Füllstoffe, Tackifier sowie Alterungsschutz- und Hilfsmittel enthalten.

14. Verwendung von Klebstoffen gemäß einem oder mehreren der Ansprüche 10 bis 13 zur Herstellung von Verklebungen, vorzugsweise in der Holz- und Möbelindustrie, im Automobilbereich, in der Bauindustrie, Schuhindustrie, Verpackungsindustrie und Textilindustrie sowie im Fensterbau, oder als Dichtstoffe.

## Claims

1. Use of polyesters based on dicarboxylic acids having an odd carbon number and polyols having an odd carbon number as an adhesive or in adhesives, **characterized in that** there are no further dicarboxylic acids present besides the dicarboxylic acids having an odd carbon number.

2. Use according to Claim 1, **characterized in that** the dicarboxylic acids are linear.

3. Use according to Claim 1 or 2, **characterized in that** the dicarboxylic acids are aliphatic.

4. Use according to one or more of Claims 1 to 3, **characterized in that** the polyols are linear.

5. Use according to one or more of Claims 1 to 4, **characterized in that** the polyols are unbranched.

6. Use according to one or more of Claims 1 to 5, **characterized in that** the polyesters have OH numbers of 5 - 150.

7. Use according to one or more of Claims 1 to 6, **characterized in that** the number-average molecular weight of the polyesters is 700 - 22 000 g/mol.

8. Use according to one or more of Claims 1 to 7, **characterized in that** the melting point of the polyesters is in the range of 20 - 125°C.

9. Use according to one or more of Claims 1 to 8, **characterized in that** the polyols having an odd carbon number are partly replaced by polyols having an even carbon number and/or by branched polyols.

10. Adhesives containing polyesters based on dicarboxylic acids having an odd carbon number and polyols having an odd carbon number, **characterized in that** there are no further dicarboxylic acids present besides the dicarboxylic acids having an odd carbon number.

11. Adhesives according to Claim 10, **characterized in that** they are hot-melt adhesives.

12. Adhesives according to Claim 10 or 11, **characterized in that** they further contain isocyanates and/or polyisocyanates.

13. Adhesives according to one or more of Claims 10 to 12, **characterized in that** they further contain other polyols, non-functionalized polymers, pigments and/or fillers, tackifiers, ageing inhibitors and assistants.

14. Use of adhesives according to one or more of Claims 10 to 13 for producing bonds, preferably in the wood and furniture industries, in the automotive sector, in the construction industry, shoe industry, packaging industry and textile industry, and in window construction, or as sealants.

## Revendications

1. Utilisation de polyesters à base d'acides dicarboxyliques à nombre impair d'atomes de carbone et de polyols à nombre impair d'atomes de carbone, en tant qu'adhésif ou dans des adhésifs, **caractérisée en ce qu'**en plus des acides dicarboxyliques à nombre impair d'atomes de carbone aucun autre acide dicarboxylique n'est présent.

2. Utilisation selon la revendication 1, **caractérisée en ce que** les acides dicarboxyliques sont linéaires.

3. Utilisation selon la revendication 1 ou 2, **caractérisée en ce que** les acides dicarboxyliques sont aliphatiques.

4. Utilisation selon une ou plusieurs des revendications 1 à 3, **caractérisée en ce que** les polyols sont linéaires.

5. Utilisation selon une ou plusieurs des revendications 1 à 4, **caractérisée en ce que** les polyols sont non ramifiés.

6. Utilisation selon une ou plusieurs des revendications 1 à 5, **caractérisée en ce que** les polyesters présentent des indices de groupes OH de 5 - 150.

7. Utilisation selon une ou plusieurs des revendications 1 à 6, **caractérisée en ce que** la masse moléculaire moyenne en nombre des polyesters vaut 700 - 22 000 g/mole.

8. Utilisation selon une ou plusieurs des revendications 1 à 7, **caractérisée en ce que** le point de fusion des polyesters se situe dans la plage de 20 - 125 °C.

9. Utilisation selon une ou plusieurs des revendications 1 à 8, **caractérisée en ce que** les polyols à nombre impair d'atomes de carbone sont en partie remplacés par des polyols à nombre pair d'atomes de carbone et/ou par des polyols ramifiés.

10. Adhésifs contenant des polyesters à base d'acides dicarboxyliques à nombre impair d'atomes de carbone et de polyols à nombre impair d'atomes de carbone, **caractérisés en ce qu'**en plus des acides dicarboxyliques à nombre impair d'atomes de carbone aucun autre acide dicarboxylique n'est présent.

11. Adhésifs selon la revendication 10, **caractérisés en ce qu'**il s'agit d'adhésifs thermofusibles.

12. Adhésifs selon la revendication 10 ou 11, **caractérisés en ce qu'**ils contiennent en outre des isocyanates et/ou des polyisocyanates.

13. Adhésifs selon une ou plusieurs des revendications 10 à 12, **caractérisés en ce qu'**ils contiennent en outre d'autres polyols, des polymères non fonctionnalisés, des pigments ou des charges, des agents collants ainsi que des agents antivieillissement et des adjuvants.

14. Utilisation d'adhésifs selon une ou plusieurs des revendications 10 à 13, pour la production de collages, de préférence dans l'industrie du bois et du meuble, dans le secteur automobile, dans l'industrie du bâtiment, l'industrie de la chaussure, l'industrie de l'emballage et l'industrie textile ainsi que dans la construction de fenêtres, ou en tant que matières d'étanchéité.
